# EUROPÄISCHE PATENTSCHRIFT

(11) **EP 4 123 123 B1**
(45) Veröffentlichungstag und Bekanntmachung des Hinweises auf die Patenterteilung: **15.05.2024**
(21) Anmeldenummer: 22182760.3
(22) Anmeldetag: 04.07.2022
(51) Int. Cl.: F01D 5/22

(54) **TURBINENSCHAUFEL FÜR EINE STRÖMUNGSMASCHINE**
TURBINE BLADE FOR A FLOW ENGINE
AUBE DE TURBINE POUR UN MOTEUR À FLUX

(30) Priorität: 14.07.2021 DE 102021118184
(43) Veröffentlichungstag der Anmeldung: 25.01.2023
(73) Patentinhaber: MTU Aero Engines AG, 80995 München (DE)
(72) Erfinder: Dopfer, Manfred, 80995 München (DE); Gassmann, Salome, 80995 München (DE); Linhard, Johannes, 80995 München (DE)

(56) Entgegenhaltungen:
- EP-A1- 3 338 938
- EP-A1- 3 382 144
- WO-A1-2021/156559
- US-A1- 2005 106 025
- US-A1- 2016 369 643

## Beschreibung

### Technisches Gebiet

Die vorliegende Erfindung betrifft eine Laufschaufel für eine Strömungsmaschine.

### Stand der Technik

Bei der Strömungsmaschine kann es sich bspw. um ein Strahltriebwerk handeln, z. B. um ein Mantelstromtriebwerk. Funktional gliedert sich die Strömungsmaschine in Verdichter, Brennkammer und Turbine. Etwa im Falle des Strahltriebwerks wird angesaugte Luft vom Verdichter komprimiert und in der nachgelagerten Brennkammer mit hinzugemischtem Kerosin verbrannt. Das entstehende Heißgas, eine Mischung aus Verbrennungsgas und Luft, durchströmt die nachgelagerte Turbine und wird dabei expandiert. Die Turbine ist in der Regel aus mehreren Stufen mit jeweils einem Stator (Leitschaufelkranz) und einem Rotor (Laufschaufelkranz) aufgebaut, die Rotoren werden von dem Heißgas angetrieben. In jeder Stufe wird dem Heißgas dabei anteilig innere Energie entzogen, die in eine Bewegung des jeweiligen Laufschaufelkranzes und damit der Welle umgesetzt wird.

Der vorliegende Gegenstand betrifft eine Laufschaufel zum Anordnen im Gaskanal der Strömungsmaschine. Die Laufschaufel kann im Allgemeinen auch im Verdichterbereich Anwendung finden, also im Verdichtergaskanal angeordnet werden; bevorzugt ist eine Anwendung im Turbinenbereich, wird sie also im Heißgaskanal platziert.

Beispiele für Laufschaufeln sind aus den Dokumenten US20050106025A1, EP3338938A1, EP3382144A1 und WO2021156559A1 bekannt.

### Darstellung der Erfindung

Der vorliegenden Erfindung liegt das technische Problem zugrunde, eine besonders vorteilhafte Laufschaufel anzugeben.

Dies wird erfindungsgemäß mit der Laufschaufel nach Anspruch 1 gelöst.

Dieser Krümmungsverlauf bzw. die Kombination aus geringerer Krümmung im Übergang zur Freiflanke und stärkerer Krümmung im Übergang zur Kontaktflanke kann hinsichtlich des mechanischen Spannungsniveaus im Deckband von Vorteil sein und zugleich eine hinreichende Anlage- bzw. Kontaktfläche zum benachbarten Deckband sicherstellen. Betrachtet man zur Illustration allein die mechanischen Spannungen, wäre im Zwischenabschnitt eine möglichst geringe Krümmung von Interesse, also bspw. ein möglichst großer Krümmungsradius. Damit würde aber ein Abstand, den der im Zwischenabschnitt liegende Nutgrund von einem Kreuzungspunkt der Flanken hat, beliebig zunehmen, würde sich also in anderen Worten der Zwischenabschnitt zunehmend in die Flanken hinein verschieben.

Damit würde insbesondere auch die Länge der Kontaktflanke abnehmen, wäre also die Anlagefläche zum benachbarten Deckband verringert und dementsprechend eine sich aus dem Krafteintrag infolge der Anlage ergebende mechanische Belastung erhöht. Umgekehrt kann mit dem vorliegenden Gegenstand, also der im Verhältnis stärkeren Krümmung im Übergang zur Kontaktflanke, deren Länge erhalten oder zumindest nicht übermäßig verringert werden, obwohl der Übergang in die Freiflanke mit einer geringeren Krümmung, also bspw. einem größeren Radius gefasst ist. Bildlich gesprochen kann aufgrund dieser Krümmungskombination mehr Material am Nutgrund verbleiben.

Bevorzugte Ausführungsformen finden sich in den abhängigen Ansprüchen und der gesamten Offenbarung, wobei in der Darstellung der Merkmale nicht immer im Einzelnen zwischen Vorrichtungs- und Verfahrens- bzw. Verwendungsaspekten unterschieden wird; jedenfalls implizit ist die Offenbarung hinsichtlich sämtlicher Anspruchskategorien zu lesen. Werden bspw. die Vorteile der Laufschaufel in einer bestimmten Anwendung beschrieben, ist dies als Offenbarung sowohl der entsprechend ausgelegten Laufschaufel als auch einer solchen Verwendung zu lesen.

Die Angaben "axial", "radial" und "Umlauf" bzw. "umlaufend", sowie die zugehörigen Richtungen (Axialrichtung etc.), beziehen sich ohne ausdrücklich gegenteilige Angabe auf die Drehachse, um welche die Laufschaufel im Betrieb rotiert. Diese fällt typischerweise mit einer Längsachse der Strömungsmaschine zusammen, insbesondere des Triebwerks bzw. Triebwerkmoduls. Der "Tangentialschnitt" wird in einer an den Umlauf tangentialen und dabei achsparallelen Schnittebene genommen, die durch das Deckband und insbesondere dessen Umfangsseite verläuft. Bevorzugt ist die Umfangsseite über ihre gesamte radiale Höhe entsprechend profiliert, ist also das hauptanspruchsgemäße Kriterium in sämtlichen durch die Umfangsseite verlaufenden Tangentialschnitten erfüllt.

Die "Umfangsseite" des Deckbands weist in Umlaufrichtung, das Deckband grenzt mit der Umfangsseite an das benachbarte Deckband (der benachbarten Laufschaufel). Die Kontaktflanke kann bspw. näher an der axial vorderen Stirnseite des Deckbands angeordnet sein (und umgekehrt die Freiflanke näher an der axial hinteren Stirnseite); bezogen auf eine Durchströmung des Gaskanals kann die Kontaktflanke also stromauf der Freiflanke liegen (und umgekehrt letztere stromab der Kontaktflanke). Die Freiflanke ist "zumindest anteilig axial orientiert", eine Flächennormale auf der Freiflanke hat also zumindest eine Richtungskomponente in axialer Richtung, insbesondere nach axial vorne.

Bevorzugt liegt die Freiflanke schräg (nicht senkrecht) zur axialen Richtung, die Flächennormale kann mit letzterer bspw. einen Winkel von mindestens 20° oder 25° einschließen, wobei mögliche Obergrenzen bspw. bei höchstens 45°, 40° bzw. 35° liegen können (betrachtet wird hierbei jeweils der kleinere von zwei zwischen Normale und axialer Richtung eingeschlossenen Winkeln). Die Kontaktflanke ist ebenfalls zumindest anteilig axial orientiert, ihre Flächennormale hat also ebenfalls zumindest eine Richtungskomponente in axialer Richtung. Da sie der Freiflanke axial gegenüberliegend angeordnet ist, weist die Flächennormale in die axial entgegengesetzte Richtung, insbesondere nach axial hinten. Auch die Kontaktflanke liegt bevorzugt schräg (nicht senkrecht) zur axialen Richtung, sie kann mit der Freiflanke bspw. einen Schnittwinkel von mindestens 55° oder 60° einschließen, mit möglichen Obergrenzen bei bspw. höchstens 75° oder 70°.

Generell sind "ein" und "eine" im Rahmen dieser Offenbarung ohne ausdrücklich gegenteilige Angabe als unbestimmte Artikel und damit immer auch als "mindestens ein" bzw. "mindestens eine" zu lesen, es können an dem Deckband also bspw. auch mindestens zwei Schaufelblätter vorgesehen sein ("Mehrfachsegment"). Das erfindungsgemäß profilierte Deckband kann im Allgemeinen auch ein radial innen am Schaufelblatt angeordnetes Innendeckband sein, bevorzugt handelt es sich jedoch um ein Außendeckband (radial außen am Schaufelblatt). Radial außen am Deckband kann eine Dichtspitze, also ein sich in Umlaufrichtung erstreckender Dichtsteg, vorgesehen sein, etwa eine Dichtspitze axial vorne und eine weitere axial hinten.

Gemäß einer bevorzugten Ausführungsform weist der Zwischenabschnitt einen Mittenabschnitt auf, der zwischen dem stärker gekrümmten ersten Übergangsabschnitt und dem weniger stark gekrümmten zweiten Übergangsabschnitt liegt und sich im Tangentialschnitt betrachtet geradlinig erstreckt. Bevorzugt geht der Mittenabschnitt tangential in den ersten und/oder zweiten Übergangsabschnitt über, können also in anderen Worten die erste und die zweite Krümmung über eine Tangente miteinander verbunden sein. Der Mittenabschnitt kann bspw. eine Designfreiheit bzw. Anpassungsmöglichkeit schaffen, etwa bei der Integration der unterschiedlich starken Krümmungen in ein bestehendes Design.

Bei einer alternativ bevorzugten Ausführungsform gehen der erste und der zweite Übergangsabschnitt direkt ineinander über, also ohne Geradenstück dazwischen. Der Übergang ist dabei bevorzugt tangential, der erste und zweite Übergangsabschnitt haben dann also im Übergangspunkt eine gemeinsame Tangente.

In bevorzugter Ausgestaltung hat der erste Übergangsabschnitt einen konstanten ersten Krümmungsradius und/oder hat der zweite Übergangsabschnitt einen konstanten zweiten Krümmungsradius. Bevorzugt gilt beides, wobei der erste Krümmungsradius dann kleiner als der zweite und entsprechend die erste Krümmung stärker als die zweite ist. Alternativ zu einem konstanten Radius bzw. Radien sind im Allgemeinen hingegen beliebige Verläufe denkbar, bspw. elliptisch oder auch frei geformt bzw. mit Splines gefittet. Im Vergleich dazu kann die "Regelkörpergeometrie", also Gestaltung mit Kreisen bzw. Radien und gegebenenfalls einer Geraden, jedoch bspw. leichter zu vermaßen sein, auch Zeichnungen können leichter erstellt bzw. überprüft werden, jedenfalls bei standardmäßigem Vorgehen.

Gemäß einer bevorzugten Ausführungsform ist der Zwischenabschnitt ausschließlich mit dem ersten und dem zweiten Krümmungsradius gefasst, gibt es also keine anderen Krümmungen. Optional kann das Geraden- bzw. Tangentenstück dazwischen vorgesehen sein, siehe vorne.

In einem Tangentialschnitt betrachtet weist von der geradlinigen Kontaktflanke zu der geradlinigen Freiflanke jede Krümmung der Umfangsseite dasselbe Vorzeichen auf, ist insbesondere konkav.

Gemäß einer Ausführungsform ist in einem Tangentialschnitt betrachtet von der geradlinigen Kontaktflanke zu der geradlinigen Freiflanke jeder Übergang von einem gekrümmten in einen geradlinigen Abschnitt tangential. Vorzugsweise ist der Verlauf der Umfangsseite in einem Tangentialschnitt betrachtet von der, geradlinigen, Kontaktflanke zu der, geradlinigen, Freiflanke stetig differenzierbar, weist also keinen Knick, Sprung oder Unstetigkeit auf.

In bevorzugter Ausgestaltung geht der erste Übergangsabschnitt tangential in die, geradlinige, Kontaktflanke über und/oder geht der zweite Übergangsabschnitt tangential in die, geradlinige, Freiflanke über. In dem Tangentialschnitt betrachtet kann eine geradlinige Verlängerung der Freiflanke also eine Tangente an einen in den zweiten Übergangsabschnitt gelegten Kreis sein (mit einem zweiten Radius) und/oder kann eine geradlinige Verlängerung der Kontaktflanke eine Tangente an einen in den ersten Übergangsabschnitt gelegten Kreis (mit einem ersten Radius) sein. Der tangentiale Übergang kann bspw. hinsichtlich der mechanischen Spannungen von Vorteil sein.

In bevorzugter Ausgestaltung ist eine mit dem Zwischenabschnitt gebildete Nut dahingehend asymmetrisch, dass eine Winkelhalbierende schräg zu einer Tangente am Nutgrund liegt. Die Winkelhalbierende liegt mittig zwischen Kontakt- und Freiflanke, und sie schneidet den Zwischenabschnitt per definitionem im Nutgrund. Legt man in diesem Schnittpunkt eine Tangente an den Zwischenabschnitt, liegt diese schräg, also nicht rechtwinklig zur Winkelhalbierenden.

Bei einer bevorzugten Ausführungsform ist der Zwischenabschnitt von gegebenenfalls dem Geraden- bzw. Tangentenstück abgesehen allenfalls konkav gekrümmt, gibt es also keinen konvex gekrümmten Abschnitt. Insbesondere in Zusammenhang mit dem bzw. den tangentialen Übergängen der Übergangsabschnitte in die Kontakt- und Freiflanke kann die Umfangsseite in dem Bereich "Kontaktflanke-Zwischenabschnitt-Freiflanke" dann insgesamt ohne konvexe Krümmung vorgesehen sein, was bspw. in Leckagehinsicht Vorteile bieten kann. Aufgrund der Gestaltung ohne Krümmungsumkehr bzw. -wechsel oder -unstetigkeit kann z. B. eine komplementäre Gestaltung des angrenzenden Deckbands vereinfacht sein und dementsprechend eine dichtere Anlage erreicht werden.

Generell ist eine entgegengesetzte Umfangsseite des Deckbands, die der profilierten Umfangsseite in Umlaufrichtung entgegengesetzt liegt, bevorzugt komplementär profiliert. In einem Laufschaufelkranz kann die in Rede stehende Laufschaufel umlaufend mit weiteren Laufschaufeln bzw. Segmenten zusammengesetzt sein, wobei bevorzugt umlaufend baugleiche Deckbänder aneinander gesetzt sind.

Zusätzlich zu einem Laufschaufelkranz richtet sich der Gegenstand auch auf ein Turbinenmodul, insbesondere ein Turbinenmodul für ein Flugtriebwerk. Bei diesem kann es sich bspw. um ein Geared-Turbo-Fan-Triebwerk handeln, aufgrund der Kopplung über das Getriebe kann das Turbinenmodul im Betrieb insbesondere schneller als der Fan des Flugtriebwerks drehen (es kann also "schnelllaufend" sein). Es kann sich bei dem Turbinenmodul bspw. um ein Hochdruck- oder Niederdruckturbinenmodul handeln.

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: schematisch ein Mantelstromtriebwerk in einem Axialschnitt;
- Figur 2: eine Laufschaufel mit Schaufelblatt und Deckband in einer schematischen Seitenansicht;
- Figur 3: das Deckband der Laufschaufel gemäß Figur 2 in einem Tangentialschnitt;
- Figur 4: eine Detailansicht zu Figur 3;
- Figur 5: eine zu Figur 4 alternative Ausgestaltung der Profilierung.

### Bevorzugte Ausführung der Erfindung

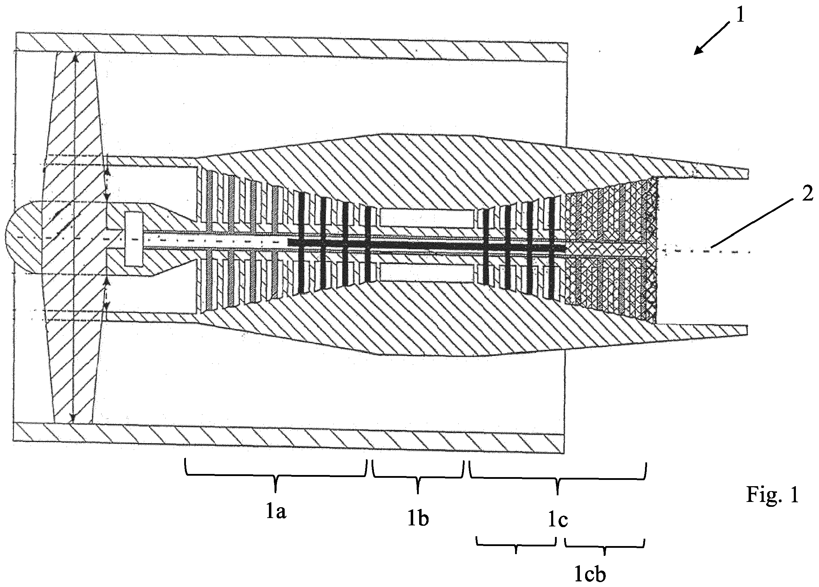

**Figur 1** zeigt eine Strömungsmaschine 1 in schematischer Ansicht, konkret ein Mantelstromtriebwerk. Die Strömungsmaschine 1 gliedert sich funktional in Verdichter 1a, Brennkammer 1b und Turbine 1c, letztere weist ein Hochdruckturbinenmodul 1ca und ein Niederdruckturbinenmodul 1cb auf. Dabei sind sowohl der Verdichter 1a als auch die Turbine 1c jeweils aus mehreren Stufen aufgebaut, jede Stufe setzt sich aus einem Leit- und einem Laufschaufelkranz zusammen. Im Betrieb rotieren die Laufschaufeln um die Längsachse 2.

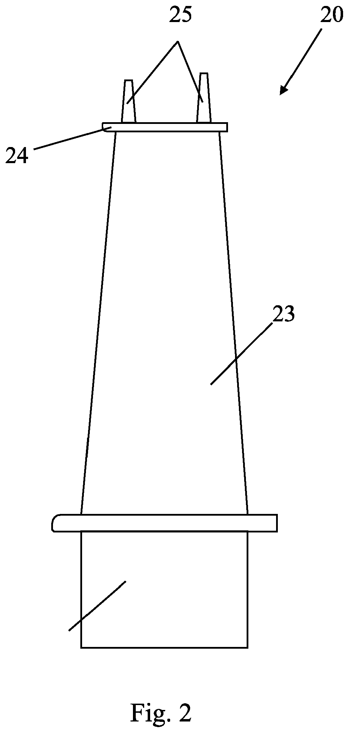

**Figur 2** zeigt in einer Seitenansicht eine Laufschaufel 20 der Turbine 1c, konkret des Niederdruckturbinenmoduls 1 cb. Diese weist ein Laufschaufelblatt 23 und ein Deckband 24 auf, über einen Schaufelfuß 21 wird sie an eine Scheibe montiert (hier nicht dargestellt). Radial außen an dem Deckband 24 sind Dichtspitzen 25 angeordnet, die im Betrieb bspw. in einen Einlaufbelag des Gehäuses einlaufen (nicht dargestellt).

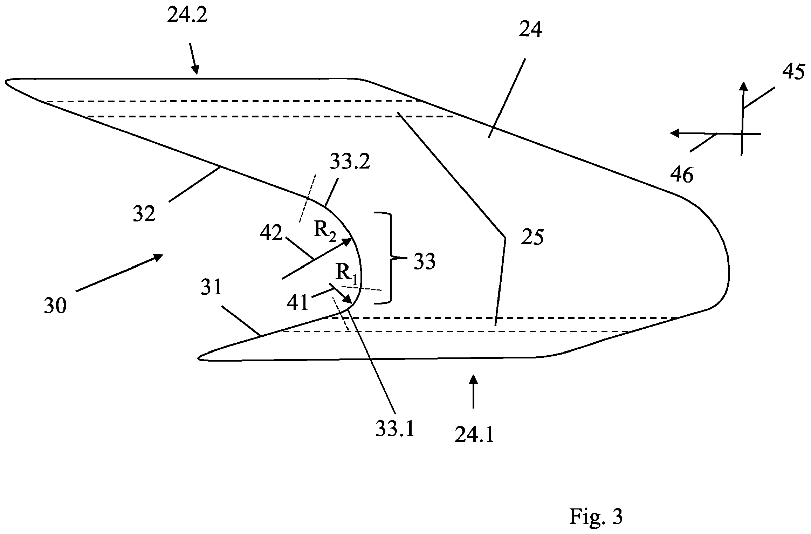

**Figur 3** zeigt das Deckband 24 in einem Tangentialschnitt, wobei dessen axial vorderes Ende 24.1 in Figur 2 links und das axial hintere Ende 24.2 in Figur 2 rechts liegt. Zur Orientierung sind in Figur 3 ferner die Dichtspitzen 25 dargestellt, die jedoch außerhalb der Schnittebene liegen und deshalb strichliert wiedergegeben sind. Der Gegenstand richtet sich auf die Profilierung der Umfangsseite 30 des Deckbands 24. Diese ist mit einer Freiflanke 32 und einer axial gegenüberliegenden Kontaktflanke 31 gefasst, dazwischen ist ein Zwischenabschnitt 33 ausgebildet.

Der Zwischenabschnitt 33 ist in einem ersten Übergangsabschnitt 33.1 der tangential in die Kontaktflanke 31 läuft, mit einer ersten Krümmung 41 gefasst, die größer als eine zweite Krümmung 42 ist, mit welcher ein zweiter Übergangsabschnitt 33.2 in die Freiflanke 32 läuft. Die Krümmungen 41, 42 sind vorliegend über einen ersten und zweiten Krümmungsradius R₁, R₂ realisiert, wobei die stärkere Krümmung einem kleineren Radius entspricht. Die Kombination aus geringerer und stärkerer Krümmung kann einerseits hinsichtlich des mechanischen Spannungsniveaus im Deckband 24 von Vorteil sein, wobei andererseits die Erstreckung der Kontaktflanke 31 und damit Anlage zum benachbarten Deckband zumindest nicht wesentlich verringert wird, vergleiche die Beschreibungseinleitung im Detail. Zur Orientierung sind in Figur 3 auch eine Axialrichtung 45 sowie eine Umlaufrichtung 46 gezeigt.

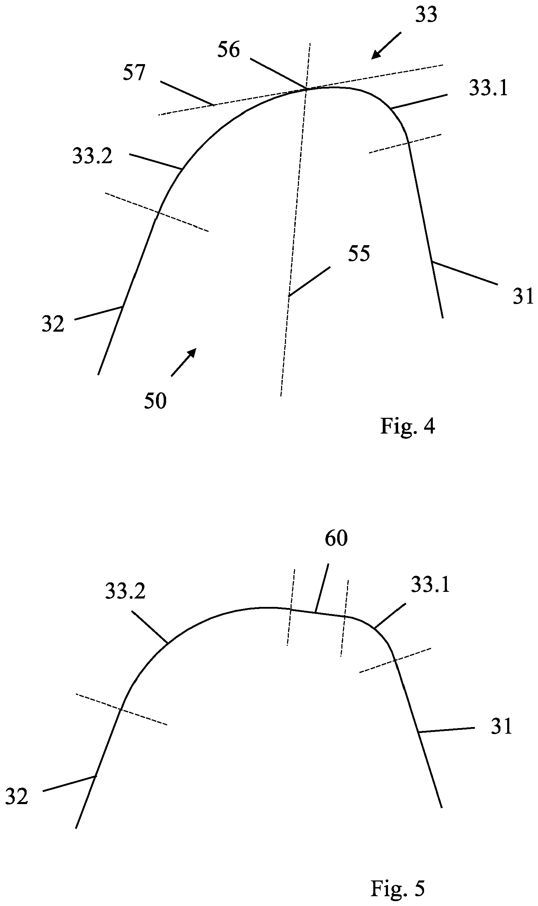

**Figur 4** zeigt die zwischen der Kontaktflanke 31 und der Freiflanke 32 gebildete Nut 50 nochmals in einer Detailansicht (ebenfalls in einem Tangentialschnitt). Dargestellt ist ferner eine mittig zwischen Kontakt- und Freiflanke 31, 32 liegende Winkelhalbierende 55, die den Zwischenabschnitt 33 in einem Nutgrund 56 schneidet. Eine dort angelegte Tangente 57 liegt aufgrund der asymmetrischen Gestaltung schräg, also nicht rechtwinklig zu der Winkelhalbierenden 55.

**Figur 5** zeigt eine leicht abgewandelte Ausführungsform, bei welcher der erste und zweite Übergangsabschnitt 33.1, 33.2 nicht direkt ineinander übergehen. Stattdessen ist dazwischen ein Mittenabschnitt 60 ausgebildet, der sich geradlinig erstreckt und jeweils tangential in die beiden Übergangsabschnitte 33.1, 33.2 läuft.

### BEZUGSZEICHENLISTE

| | | | |
|---|---|---|---|
| Strömungsmaschine | | | 1 |
| | Turbine | | 1c |
| | | Hochdruckturbinenmodul | 1ca |
| | | Niederdruckturbinenmodul | 1cb |
| Längsachse | | | 2 |
| Laufschaufel | | | 20 |
| Schaufelfuß | | | 21 |
| Laufschaufelblatt | | | 23 |
| Deckband | | | 24 |
| | | Axial vorderes Ende | 24.1 |
| | | Axial hinteres Ende | 24.2 |
| Dichtspitzen | | | 25 |
| Umfangsseite | | | 30 |
| Kontaktflanke | | | 31 |
| Freiflanke | | | 32 |
| Zwischenabschnitt | | | 33 |
| Erster Übergangsabschnitt | | | 33.1 |
| Zweiter Übergangsabschnitt | | | 33.2 |
| Erste Krümmung | | | 41 |
| Zweite Krümmung | | | 42 |
| Axialrichtung | | | 45 |
| Umlaufrichtung | | | 46 |
| Nut | | | 50 |
| Winkelhalbierende | | | 55 |
| Nutgrund | | | 56 |
| Tangente | | | 57 |
| Mittenabschnitt | | | 60 |
| Erster Krümmungsradius | | | R₁ |
| Zweiter Krümmungsradius | | | R₂ |

## Patentansprüche

1. Laufschaufel (20) für eine Strömungsmaschine (1), mit einem Schaufelblatt (23) und einem Deckband (24),
wobei das Deckband (24) an einer Umfangsseite (30) profiliert ist, nämlich in einem Tangentialschnitt betrachtet
- eine Kontaktflanke (31) hat, die zumindest anteilig axial orientiert ist, und
- eine Freiflanke (32) hat, die ebenfalls zumindest anteilig axial orientiert ist, und zwar der Kontaktflanke (31) entgegengesetzt,
wobei in dem Tangentialschnitt betrachtet ein Zwischenabschnitt (33) zwischen der Kontaktflanke (31) und der Freiflanke (32)
- in einem ersten Übergangsabschnitt (33.1) zur Kontaktflanke (31) eine erste Krümmung (41) hat und
- in einem zweiten Übergangsabschnitt (33.2) zur Freiflanke (32) eine zweite Krümmung (42) hat,
wobei die erste Krümmung (41) größer als die zweite Krümmung (42) ist, **dadurch gekennzeichnet, dass** in einem Tangentialschnitt betrachtet von der geradlinigen Kontaktflanke (31) zu der geradlinigen Freiflanke (32) jede Krümmung der Umfangsseite (30) dasselbe Vorzeichen aufweist.

2. Laufschaufel (20) nach Anspruch 1, bei welcher der Zwischenabschnitt (33) zwischen dem ersten und dem zweiten Übergangsabschnitt (33.1, 33.2) einen Mittenabschnitt (60) aufweist, der in dem Tangentialschnitt betrachtet geradlinig verläuft.

3. Laufschaufel (20) nach Anspruch 1, bei welcher in dem Zwischenabschnitt (33) der erste und der zweite Übergangsabschnitt (33.1, 33.2) direkt ineinander übergehen.

4. Laufschaufel (20) nach einem der vorstehenden Ansprüche, bei welcher der Zwischenabschnitt (33) in dem Tangentialschnitt betrachtet über den ersten Übergangsabschnitt (33.1) hinweg einen konstanten ersten Krümmungsradius R₁ hat.

5. Laufschaufel (20) nach einem der vorstehenden Ansprüche, bei welcher der Zwischenabschnitt (33) in dem Tangentialschnitt betrachtet über den zweiten Übergangsabschnitt (33.2) hinweg einen konstanten zweiten Krümmungsradius R₂ hat.

6. Laufschaufel (20) nach den Ansprüchen 4 und 5, bei welcher der Zwischenabschnitt (33) in dem Tangentialschnitt betrachtet, von einer ggf. abschnittsweise geradlinigen Erstreckung abgesehen, ausschließlich mit dem ersten und dem zweiten Krümmungsradius R₁, R₂ gefasst ist.

7. Laufschaufel (20) nach einem der vorstehenden Ansprüche, bei welcher in einem Tangentialschnitt betrachtet jeder Übergang von einem gekrümmten in einen geradlinigen Abschnitt tangential ist.

8. Laufschaufel (20) nach einem der vorstehenden Ansprüche, bei welcher der erste Übergangsabschnitt (33.1) in dem Tangentialschnitt betrachtet tangential in die, geradlinige, Kontaktflanke (31) übergeht

9. Laufschaufel (20) nach einem der vorstehenden Ansprüche, bei welcher der zweite Übergangsabschnitt (33.2) in dem Tangentialschnitt betrachtet tangential in die, geradlinige, Freiflanke (32) übergeht

10. Laufschaufel (20) nach einem der vorstehenden Ansprüche, bei welcher in dem Tangentialschnitt betrachtet eine Winkelhalbierende (55), die mittig zwischen der Kontaktflanke (31) und der Freiflanke (32) liegt und den Zwischenabschnitt (33) in einem Nutgrund (56) schneidet, schräg zu einer in dem Nutgrund (56) an den Zwischenabschnitt (33) gelegten Tangente (57) liegt.

11. Laufschaufel (20) nach einem der vorstehenden Ansprüche, bei welcher der Zwischenabschnitt (33) in dem Tangentialschnitt betrachtet, von einer ggf. abschnittsweise geradlinigen Erstreckung abgesehen, ausschließlich konkav gekrümmt ist.

12. Laufschaufelkranz mit einer Laufschaufel (20) nach einem der vorstehenden Ansprüche.

13. Turbinenmodul (1ca, 1cb) mit einer Laufschaufel (20) nach einem der Ansprüche 1 bis 11 oder einem Laufschaufelkranz nach Anspruch 12.

14. Strömungsmaschine (1), insbesondere Strahltriebwerk, mit einem Turbinenmodul (1ca, 1cb) nach Anspruch 13.

## Claims

1. Rotor blade (20) for a turbomachine (1), comprising an airfoil (23) and a shroud (24),
wherein the shroud (24) is profiled on a peripheral side (30), and specifically when viewed in a tangential section,
- has a contact flank (31) which is at least partially axially oriented, and
- has a free flank (32) which is likewise at least partially axially oriented, namely opposite the contact flank (31),
wherein an intermediate portion (33) between the contact flank (31) and the free flank (32), when viewed in the tangential section,
- has a first curvature (41) in a first transition portion (33.1) toward the contact flank (31), and
- has a second curvature (42) in a second transition portion (33.2) toward the free flank (32),
the first curvature (41) being greater than the second curvature (42), **characterized in that,**
when viewed in a tangential section, from the straight contact flank (31) to the straight free flank (32), each curvature of the peripheral side (30) has the same sign.

2. Rotor blade (20) according to claim 1, in which the intermediate portion (33) comprises, between the first and the second transition portion (33.1, 33.2), a central portion (60) which extends in a straight line when viewed in the tangential section.

3. Rotor blade (20) according to claim 1, in which the first and the second transition portion (33.1, 33.2) merge directly into one another in the intermediate portion (33).

4. Rotor blade (20) according to any of the preceding claims, in which the intermediate portion (33), when viewed in the tangential section, has a constant first radius of curvature R₁ over the first transition portion (33.1).

5. Rotor blade (20) according to any of the preceding claims, in which the intermediate portion (33), when viewed in the tangential section, has a constant second radius of curvature R₂ over the second transition portion (33.2).

6. Rotor blade (20) according to claims 4 and 5, in which the intermediate portion (33), when viewed in the tangential section, is defined exclusively by the first and the second radius of curvature R₁, R₂, apart from an optionally straight extension in portions.

7. Rotor blade (20) according to any of the preceding claims, in which, when viewed in a tangential section, each transition from a curved portion into a straight portion is tangential.

8. Rotor blade (20) according to any of the preceding claims, in which the first transition portion (33.1), when viewed in the tangential section, merges tangentially into the straight contact flank (31).

9. Rotor blade (20) according to any of the preceding claims, in which the second transition portion (33.2), when viewed in the tangential section, merges tangentially into the straight free flank (32)

10. Rotor blade (20) according to any of the preceding claims, in which, when viewed in the tangential section, an angle bisector (55), which lies centrally between the contact flank (31) and the free flank (32) and intersects the intermediate portion (33) in a groove base (56), lies obliquely with respect to a tangent (57) located in the groove base (56) on the intermediate portion (33).

11. Rotor blade (20) according to any of the preceding claims, in which the intermediate portion (33), when viewed in the tangential section, is exclusively concavely curved, apart from an optionally straight extension in portions.

12. Rotor blade ring comprising a rotor blade (20) according to any of the preceding claims.

13. Turbine module (1ca, 1cb) comprising a rotor blade (20) according to any of claims 1 to 11, or a rotor blade ring according to claim 12.

14. Turbomachine (1), in particular a jet engine, comprising a turbine module (1ca, 1cb) according to claim 13.

## Revendications

1. Aube mobile (20) pour une turbomachine (1), comportant une pale d'aube (23) et un carénage (24),
dans laquelle le carénage (24) est profilé sur un côté périphérique (30), à savoir considéré dans une section tangentielle
- a un flanc de contact (31) qui est orienté axialement au moins proportionnellement, et
- a un flanc libre (32) qui est également orienté axialement au moins proportionnellement, et ce à l'opposé du flanc de contact (31),
dans laquelle, considérée dans la section tangentielle, une partie intermédiaire (33) entre le flanc de contact (31) et le flanc libre (32)
- a une première courbure (41) dans une première partie de transition (33.1) vers le flanc de contact (31) et
- a une seconde courbure (42) dans une seconde partie de transition (33.2) vers le flanc libre (32),
dans laquelle la première courbure (41) est supérieure à la seconde courbure (42), **caractérisée en ce que**
chaque courbure du côté périphérique (30) présente le même signe, considérée dans une section tangentielle, à partir du flanc de contact (31) rectiligne jusqu'au flanc libre (32) rectiligne.

2. Aube mobile (20) selon la revendication 1, dans laquelle la partie intermédiaire (33) entre la première et la seconde partie de transition (33.1, 33.2) présente une partie centrale (60) qui s'étend de manière rectiligne considérée dans la section tangentielle.

3. Aube mobile (20) selon la revendication 1, dans laquelle la première et la seconde partie de transition (33.1, 33.2) se prolongent directement l'une dans l'autre dans la partie intermédiaire (33).

4. Aube mobile (20) selon l'une des revendications précédentes, dans laquelle la partie intermédiaire (33), considérée dans la section tangentielle, a un premier rayon de courbure R₁ constant sur la première partie de transition (33.1).

5. Aube mobile (20) selon l'une des revendications précédentes, dans laquelle la partie intermédiaire (33), considérée dans la section tangentielle, a un second rayon de courbure R₂ constant sur la seconde partie de transition (33.2).

6. Aube mobile (20) selon les revendications 4 et 5, dans laquelle la partie intermédiaire (33), considérée dans la section tangentielle, à l'exception d'une étendue rectiligne éventuellement dans certaines parties, est composée exclusivement par le premier et le second rayon de courbure R₁, R₂.

7. Aube mobile (20) selon l'une des revendications précédentes, dans laquelle, considérée dans une section tangentielle, chaque transition d'une partie incurvée à une partie rectiligne est tangentielle.

8. Aube mobile (20) selon l'une des revendications précédentes, dans laquelle la première partie de transition (33.1), considérée dans la section tangentielle, se prolonge de manière tangentielle dans le flanc de contact (31) rectiligne.

9. Aube mobile (20) selon l'une des revendications précédentes, dans laquelle la seconde partie de transition (33.2), considérée dans la section tangentielle, se prolonge de manière tangentielle dans le flanc libre (32) rectiligne.

10. Aube mobile (20) selon l'une des revendications précédentes, dans laquelle, considérée dans la section tangentielle, une bissectrice (55) qui se situe centralement entre le flanc de contact (31) et le flanc libre (32) et croise la partie intermédiaire (33) dans un fond de rainure (56) se situe de manière oblique par rapport à une tangente (57) placée dans le fond de rainure (56) au niveau de la partie intermédiaire (33).

11. Aube mobile (20) selon l'une des revendications précédentes, dans laquelle la partie intermédiaire (33), considérée dans la section tangentielle, à l'exception d'une étendue rectiligne éventuellement dans certaines parties, est incurvée exclusivement de manière concave.

12. Couronne d'aubes mobiles comportant une aube mobile (20) selon l'une des revendications précédentes.

13. Module de turbine (1ca, 1cb) comportant une aube mobile (20) selon l'une des revendications 1 à 11 ou une couronne d'aubes mobiles selon la revendication 12.

14. Turbomachine (1), en particulier réacteur, comportant un module de turbine (1ca, 1cb) selon la revendication 13.
